# EUROPEAN PATENT SPECIFICATION

(11) **EP 4 662 459 B1**
(45) Date of publication and mention of the grant of the patent: **30.09.2026**
(21) Application number: 24711789.8
(22) Date of filing: 23.02.2024
(51) Int. Cl.: B24C 9/00, G01N 15/0227, G01N 15/1433, G01F 13/00

(54) **UNIT FOR ANALYSING DRY BLASTING MATERIAL IN A DRY BLASTING MACHINE**
EINHEIT ZUR ANALYSE VON TROCKENSTRAHLMATERIAL IN EINER TROCKENSTRAHLMASCHINE
UNITÉ D'ANALYSE DE MATÉRIAU DE SABLAGE À SEC DANS UNE MACHINE DE SABLAGE À SEC

(43) Date of publication of application: 17.12.2025
(73) Proprietor: Wheelabrator Group GmbH, 48629 Metelen (DE)
(72) Inventor: KONERT, Karl-Heinz, 48282 Emsdetten (DE); DROPMANN, Heinrich Antonius, 48629 Metelen (DE)
(74) Representative: Zacco GmbH
(86) International application number: PCT/EP2024/054626
(87) International publication number: WO 2025/176313

(56) References cited:
- US-A- 5 011 285
- US-A- 6 090 199
- US-A1- 2014 213 150
- US-A1- 2015 093 969

## Description

The present invention relates to a unit for monitoring physical characteristics of dry blasting material used during the blasting process in a dry blasting machine.

Blasting systems are used to treat workpiece surfaces by cleaning, removing and/or compacting material layers close to the workpiece surface by projecting blasting material at high speed thereon. For the purpose of material cleaning and/or removal (shot blasting), the blasting material used usually consists of ferrous or non-ferrous particles such as shot, i.e. grains of spherical shape, or grit, i.e. grains with angular shape, or abrasive mineral substances such as ceramics or glass beads or corundum particles. For the purpose of surface compaction (shot peening), the blasting material usually used consists of small steel shot, i.e. grains of spherical shape, or cut wire. After being projected onto the workpiece, the blasting material is collected and fed back to the blasting machine in a closed circuit. Upon impacting the workpiece, material shavings or surface deposits such as scale or rust or foundry sand are removed from the surface. Besides, the blasting material may also shatter into smaller pieces. The blasting material collected after impact on the workpiece is therefore contaminated with dust and debris of various sizes. Separators, e.g. magnetic and/or air separators are used to remove most of the dust and debris and undersize abrasive particles. The physical characteristics of the blasting material, in particular its particle size distribution, still inevitably diverges from the original and optimal characteristics, which results in a degraded efficiency and/or quality of the blasting process.

In order to timely replenish the blasting material or take other appropriate action to keep the particle size distribution of the blasting material in the required range, it is possible to monitor the size of the particles in the blasting material during the blasting process.

This can be done mechanically by means of one or several sieves separating bigger particles from smaller ones according to the mesh size and quantifying each amount of particles obtained (see e.g. JP2002178263A and DE102012108001A1). However, these methods are cumbersome because several sieves of different mesh sizes are needed to obtain detailed size measurements. Optical measurement methods have also been developed, wherein the blasting material passes through a beam of light and the intensity of the transmitted or reflected light is measured (see e.g. KR20100134222A and CN1356369A). However, these methods are not optimal for precisely measuring the size of individual particles in a flow of dry blasting material and thus obtaining a reliable particle size distribution of the blasting material. US2015/093969A1 provides another example of an analysis unit for dry blasting material.

The object of the present invention is to provide a unit allowing continuous analysing of dry blasting material in a dry blasting machine to precisely measure the size and count the number of individual particles in a flow of dry blasting material in view of obtaining a reliable particle size distribution of the blasting material. This is achieved by the analysing unit according to claim 1.

In the present description, the terms "vertical" and "horizontal" are to be understood in reference to the direction of the force of gravity when the analysing unit stands in its normal operational position: "vertical" refers to a direction parallel to the direction of gravity and "horizontal" refers to a direction perpendicular to the direction of gravity.

The drawings show:
- Figure 1a: Perspective view of the analysing unit
- Figure 1b: Schematic side sectional view of the analysing unit
- Figure 2a: Side sectional view of the dosing and spreading units
- Figure 2b: Side sectional view of the dosing and spreading units, with blasting material, without vibrations
- Figure 2c: Side sectional view of the dosing and spreading units, with blasting material, with vibrations
- Figure 3a: Side sectional view of the dosing and spreading units, with dosing chute and funnel
- Figure 3b: Side sectional view of the inlet, dosing unit and spreading units, with dosing chute and funnel
- Figure 4a: Side sectional view of the inlet, dosing unit and spreading unit, with dosing chute, funnel and silo (section in a plane perpendicular to the section planes of figures 2 and 3)
- Figure 4b-c: Perspective views of alternative embodiments of the silo and bypass
- Figure 4d: Side sectional view of the inlet, dosing unit, spreading unit, bypass and air inlet
- Figure 5: Side view of the bracket

The drawings show mere exemplary embodiments of the invention.

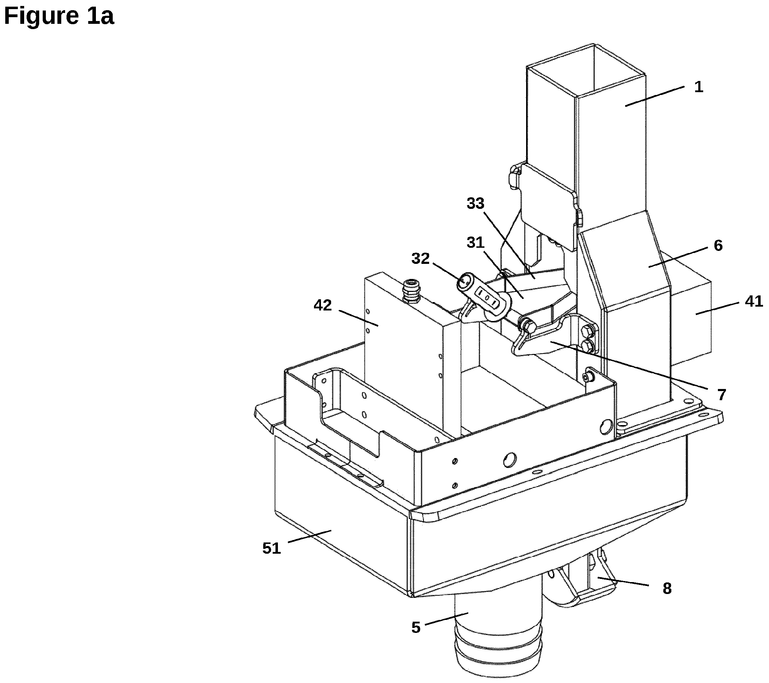

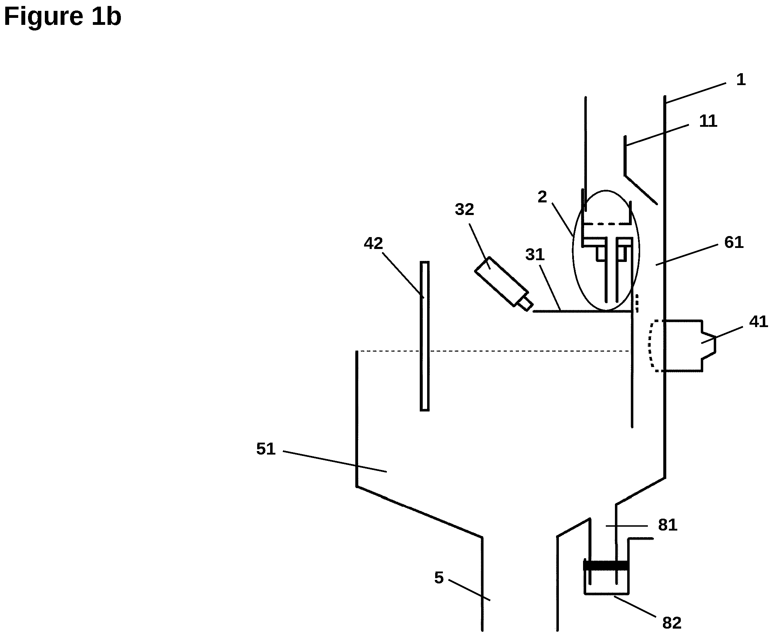

The analysing unit according to the invention is adapted to be arranged in or on a dry blasting machine in the path of the blasting material M, in particular between the machine's separator, which cleans the blasting material M from dust, debris and undersize abrasive, and its projection towards the workpiece. It comprises (see figures 1a-b):
- an inlet 1 adapted for the entry of blasting material M into the analysing unit;
- a dosing unit 2 adapted to create a constant and continuous stream of blasting material M;
- a spreading unit 3 adapted to spread the stream of blasting material M into a curtain C of falling blasting material M;
- a measurement unit 41, 42 adapted to count and measure the size of particles contained in the falling curtain C of blasting material M; and
- an outlet 5 adapted for the exit of blasting material M from the analysing unit.

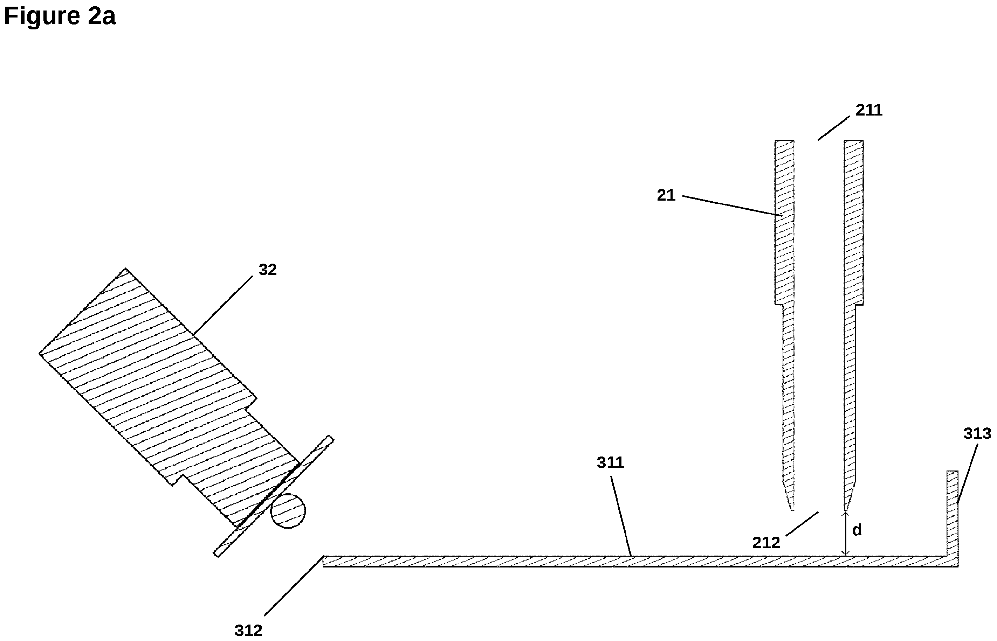

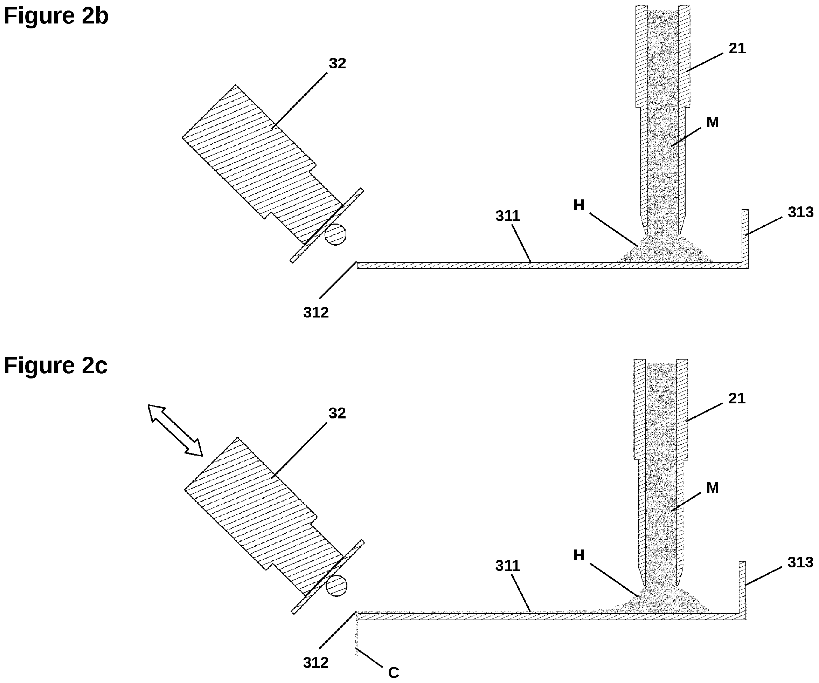

The dosing unit 2 comprises a dosing chute 21 having a top opening 211 and a bottom opening 212, and is adapted for the passage of blasting material M from its top opening 211 to its bottom opening 212 under the effect of gravity (see figure 2a). The spreading unit 3 comprises a vibration plate 31 arranged beneath the bottom opening 212 of the dosing chute 21 and a vibrator 32 adapted to vibrate the vibration plate 31. Under the effect of the vibrations, the blasting material M pouring out of the bottom opening 212 of the dosing chute 21 moves from the area on which it is deposited onto the vibration plate 31 towards a straight edge 312 of the vibration plate 31 from which it falls off in a curtain C of blasting material M (see figure 2c). During this movement, the vibrations also cause the blasting material M to spread into a thin layer, preferably of entirely or at least mostly discrete particles not touching each other. The curtain C of blasting material M falling off the straight edge 312 is therefore preferably entirely or at least mostly composed of discrete particles not touching each other, and which all fall essentially in the same plane as a single layer. The measurement unit 41, 42 then counts and measures the size of each particle contained in the falling curtain C of blasting material M.

In order to guarantee the reliability of the measurements acquired by the measurement unit 41, 42, it is essential that the curtain C of blasting material M falling off the vibration plate 31 be as constant and continuous as possible and that any fluctuations in the flow of blasting material M entering the dosing unit 2 be smoothed out. According to the invention, the constant and continuous curtain C of falling particles of blasting material M is obtained by having the blasting material M flow onto the vibration plate 31 to form a heap H of blasting material M thereon, the heap H of blasting material M:
- blocking the flow of blasting material M onto the vibration plate 31 when the vibration plate 31 does not vibrate (see figure 2b); and
- spreading onto the vibration plate 31 when the latter does vibrate, the heap H not building up large enough to block the flow of blasting material M onto the vibration plate 31 (see figure 2c). So, a constant and continuous flow of blasting material M flows onto the vibration plate 31, spreads thereon and falls off the straight edge 312 in a constant and continuous curtain C of falling particles of blasting material M.

This is achieved by carefully adjusting the distance d between the bottom opening 212 of the dosing chute 21 and the vibration plate 31. This distance d should be:
- sufficiently small that when the vibration plate 31 does not vibrate, the blasting material M pouring out of the bottom opening 212 accumulates on the vibration plate 31 in the immediate vicinity of the bottom opening 212 and forms a small heap H clogging it, so that the flow of blasting material M pouring out of the bottom opening 212 is stopped; and
- sufficiently large that when the vibration plate 31 does vibrate, the blasting material M pouring out of the bottom opening 212 spreads on the vibration plate 31 and continuously pours out of the bottom opening 212 rather than forming a heap H clogging the bottom opening 212.

This way, the flow of the blasting material M is exclusively made possible and determined by the vibration of the vibration plate 31. Constant and continuous vibrations therefore cause a constant and continuous flow of blasting material M from the dosing chute 21 onto the vibration plate 31. The exact distance d between the bottom opening 212 of the dosing chute 21 and the vibration plate 31 depends on the properties of the blasting material M, especially on the particle size and shape, and therefore differs for each application and type of blasting material M. Tests have shown that the adequate range for this distance d is preferably between 4 and 15 mm, most preferably between 6 and 10 mm. The person skilled in the art can easily determine the adequate distance between the bottom opening 212 of the dosing chute 21 and the vibration plate 31 for a given blasting material M by carrying out a few simple tests and adjusting the distance until the above result is achieved.

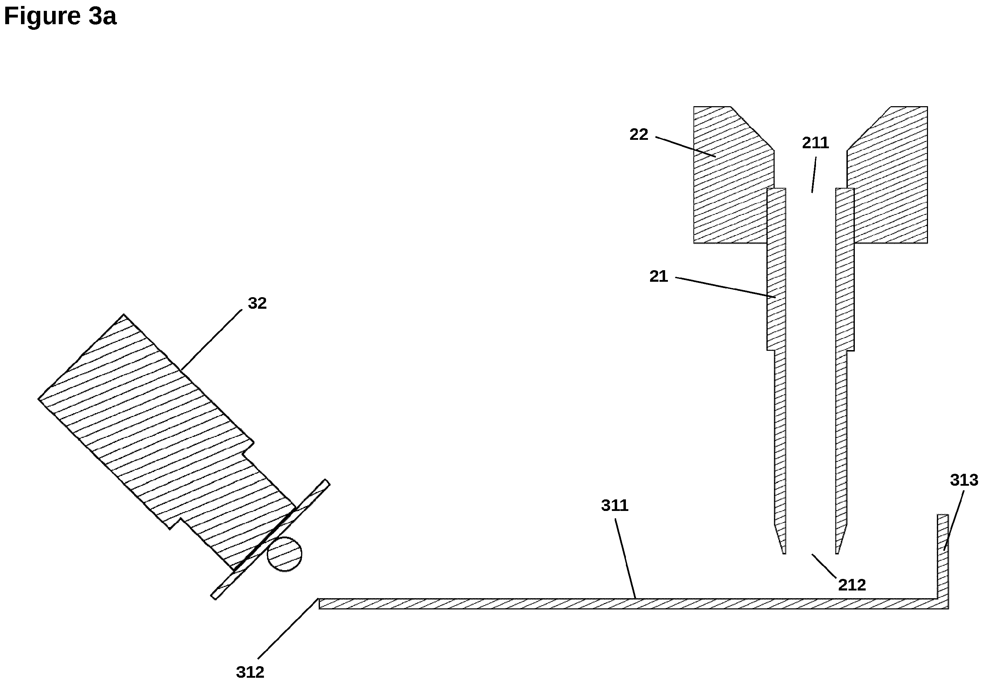

The dosing chute 21 is preferably oriented vertically or at a non-null angle with respect to the horizontal direction, in such manner that blasting material M can fall or slide therein under the effect of gravity. The dosing chute 21 is preferably a tube of circular section but may have any other suitable section, for example a square-shaped section, and its section may be constant or vary along its length. For example, the dosing chute 21 may be wider at its top opening 211 than at its bottom opening 212. Tests have shown that a dosing chute 21 with a constant inner section between 5 and 20 mm, preferably between 7 and 10 mm, is suitable. In the preferred embodiment of the invention, the top opening 211 of the dosing chute 21 is connected to a funnel 22 (see figure 3a). The funnel 22 has a wider section at its top and a narrower section at its bottom and is thus adapted to collect incoming blasting material M and to direct it into the dosing chute 21. In a particularly advantageous embodiment of the invention, the dosing chute 21 is attached to the analysing unit in a way allowing its bottom opening 212 to be movable along the longitudinal direction of the dosing chute 21 with respect to the vibration plate 31. For example, the dosing chute 21 may be attached to the funnel 22 and feature a thread near its top opening 211 so as to be screwable into an opening in the funnel 22 having a corresponding screw thread. This allows to easily adjust the distance between the bottom opening 212 of the dosing chute 21 and the vibration plate 31, and therefore to adapt the analysing unit to any type of blasting material M. Alternatively, the dosing chute 21 may be telescopic, which is another equivalent solution allowing to adjust the distance between the bottom opening 212 of the dosing chute 21 and the vibration plate 31.

Preferably, the inlet 1 is a vertical chute allowing the incoming main stream of blasting material M to fall therein by gravity.

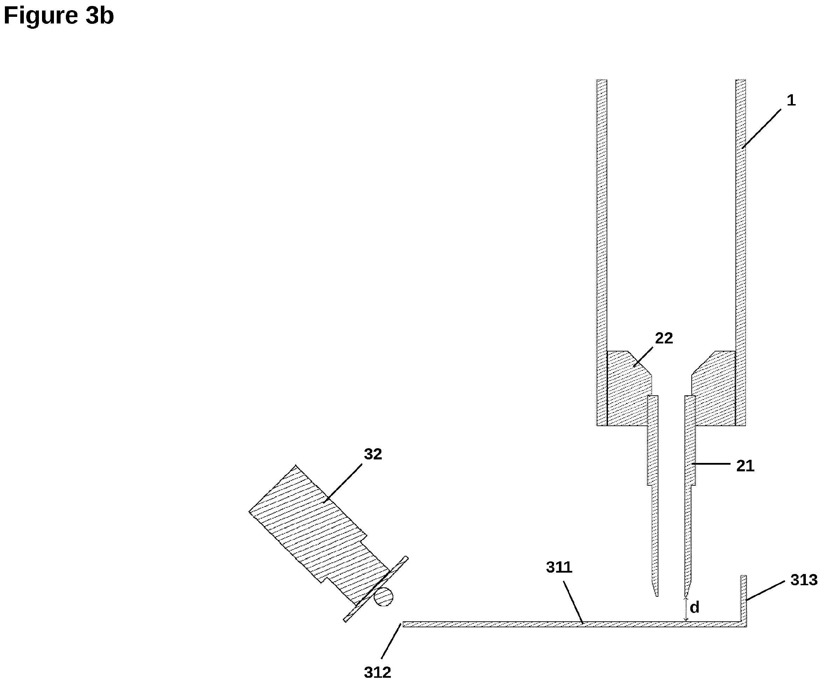

In simple embodiments of the invention, the dosing chute 21 is arranged within the inlet 1 or at the bottom end of the inlet 1 and blasting material M falls directly from the inlet 1 into the dosing chute 21 or into the funnel 22 connected thereto (see figure 3b).

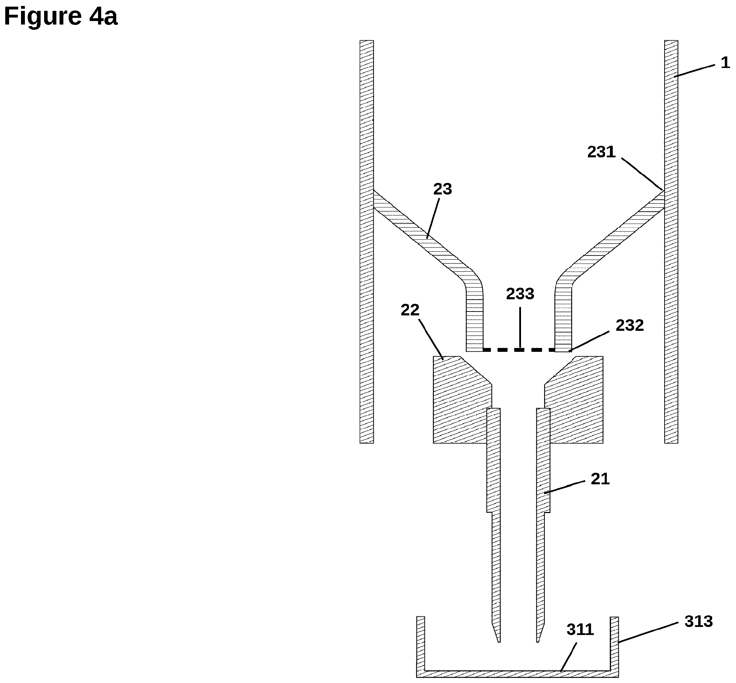

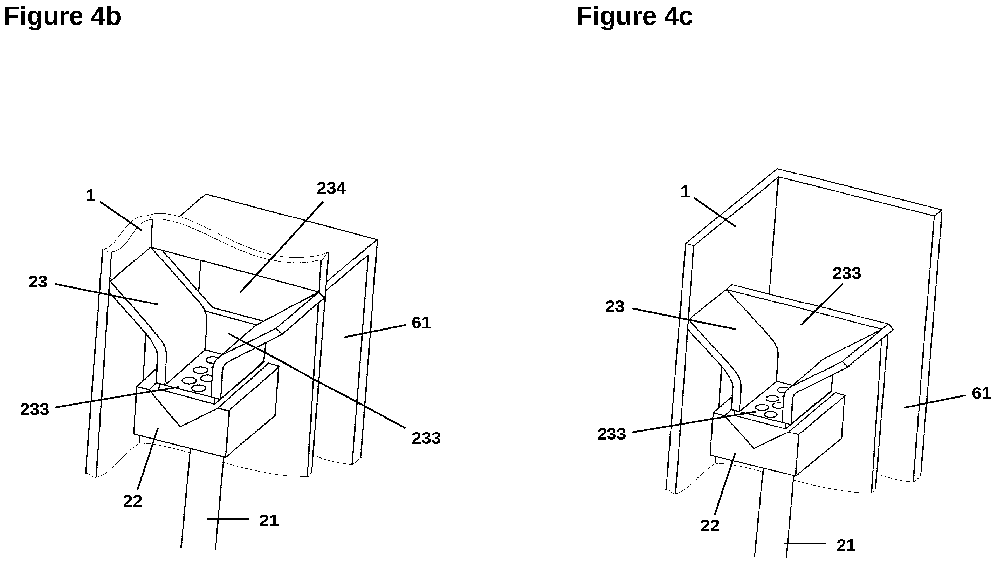

In certain embodiments of the invention, the dosing unit 2 comprises a silo 23 arranged within the inlet 1 or at the bottom end of the inlet 1 and the dosing chute 21 is arranged beneath the silo 23 (see figure 4a). The silo 23 has a top opening 231 wider than its bottom opening 232. Preferably, the section of the silo 23 progressively decreases between its top opening 231 and bottom opening 232. In particular, all or part of the silo 23 may be funnel-shaped, for example Y-shaped. The silo 23 is adapted to accumulate a certain amount of the blasting material M entering the inlet 1 and adapted to create a stream of blasting material M trickling down its bottom opening 232 into the dosing chute 21. Preferably, the bottom opening 232 of the silo 23 is dimensioned in such manner that the flow rate of blasting material M through it is equal to the flow rate of the blasting material M out of the dosing chute 21. This way, the silo 23 provides just the right amount of blasting material M needed to maintain the flow of blasting material M through the dosing chute 21. By accumulating the blasting material M before letting it trickle down its bottom opening 232 and into the dosing chute 21, the silo 23 serves as a buffer and ascertains the constancy of the stream flowing to the dosing chute 21 even if the incoming stream of blasting material M is irregular. Providing the dosing chute 21 with a constant stream of blasting material M decreases the risk of jamming the dosing chute 21 by a sudden influx of blasting material M. Preferably, the bottom opening 232 of the silo 23 comprises a sieve 233 consisting of meshed wire or of a perforated plate. The sieve 233 ascertains that the blasting material M falls slowly through it at a constant flow rate. The size of the openings of the sieve 233 is chosen in accordance with the particle size of the blasting material M for each application.

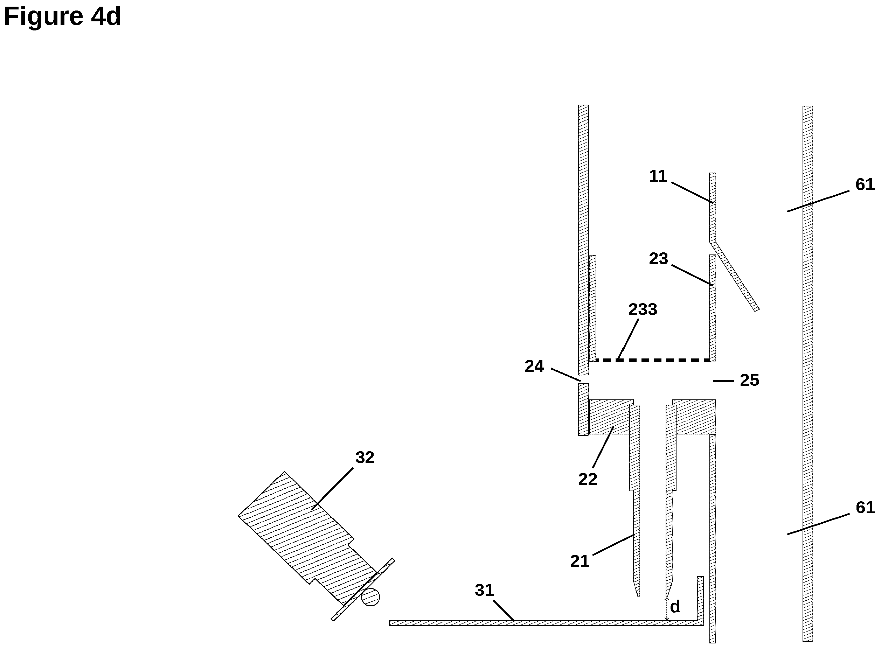

In advantageous embodiments of the invention, the analysing unit has a bypass 6 adapted to lead part of the blasting material M from the inlet 1 to the outlet 5 without going through the spreading and measurement units 3, 4 while the dosing unit 2 directs just the right amount of basting material needed for the analysis to the spreading and measurement units 3, 41, 42 (see figure 1a). This way, a large stream of blasting material M may enter the inlet 1 without risk of overwhelming the spreading and measurement units 3, 41, 42. So, it is easy to fit a dry blasting machine with the present analysing unit, as it can simply be arranged on the path of the main stream of blasting material M flowing to and from the machine. The bypass 6 comprises one or several bypass chutes 61 connecting the inlet 1 to a bypass exit located downstream from the measurement unit 41, 42 and upstream from the outlet 5. In certain embodiments of the invention with bypass 6, the inlet 1 comprises a deflector 11 located upstream from the outlet chute 21 and/or from the silo 23, which helps adjusting the amount of blasting material M which is directed towards the bypass 6 or towards the silo 23 or dosing chute 21 (see figure 4d).

In the simplest embodiment of the invention with bypass 6, the dosing chute 21 is arranged within the inlet 1 and its top opening 211 occupies only a part of the whole section of the inlet 1. The rest of the section of the inlet 1 not occupied by the dosing chute's 21 top opening 211 constitutes the entrance of the bypass 6. This way, the dosing chute 21 captures part of the blasting material M falling down the inlet 1, while the remainder of the blasting material M either falling past the dosing chute 21 or flowing over the filled dosing chute 21 falls into the bypass 6. In this embodiment of the invention, the dosing unit 21 may or may not be connected to a funnel 22 as described hereinabove and the funnel 22 helps to divert more blasting material M into the dosing chute 21.

In an embodiment of the invention with bypass 6 and silo 23, the silo 23 is arranged within the inlet 1 and its top opening 231 occupies the whole section of the inlet 1 (see figures 4a-b). This way, all of the blasting material M entering the inlet 1 enters the silo 23. The bypass 6 is adjacent to the silo 23 and a side wall 233 of the silo 23 separating the silo 23 and the bypass 6 has an opening 234 allowing blasting material M to flow over from the silo 23 into the adjacent bypass once the bottom region of the silo 23 is filled.

In another embodiment of the invention with bypass 6 and silo 23, the silo 23 is arranged within the inlet 1 and its top opening 231 occupies only a part of the whole section of the inlet 1 (see figure 4c). The rest of the section of the inlet 1 not occupied by the silo's 23 top opening 231 constitutes the entry of the bypass 6 and an inner side wall 233 of the silo 23 separates the silo 23 from the bypass 6 within the inlet 1. This way, the silo 23 captures part of the blasting material M falling down the inlet 1, while the remainder of the blasting material M either falling past the silo 23 or flowing over the filled silo 23 falls into the bypass 6.

In any embodiment of the invention with silo 23 and bypass 6, the bypass 6 is preferably adjacent to the silo 23 and the silo 23 and its bottom opening 232 are preferably dimensioned to hold and let through only a fraction of the blasting material M entering the silo 23, the remainder thereof flowing over the filled silo 23 and/or through an opening 234 in a wall separating the silo 23 and the bypass 6 into the bypass 6. This way, the silo 23 is never empty and always contains at least some blasting material M to feed the flow of blasting material M trickling down its bottom opening 232, which is an additional contribution towards guaranteeing the continuity of this flow.

Tests have shown that in the embodiments of the invention with a silo 23 arranged above the dosing chute 21, blasting material M may accumulate at the top opening 211 of the dosing chute 21 or in the funnel 22 (if a funnel 22 is arranged above the dosing chute 21). In order to remedy this, an air inlet 24 can be provided between the silo 23 and the dosing chute 21 in order to clean this area with impulses of pressurised air (see figure 4d). Preferably, the bypass 6 is arranged adjacent to the region between the silo 23 and the dosing chute 21, the region between the silo 23 and the dosing chute 21 has an opening 25 to the bypass 6 and the an air inlet 24 is provided between the silo 23 and the dosing chute 21 opposite to the opening 25, allowing blasting material M ejected by an impulse of pressurised air to be projected into the bypass 6. If a funnel 22 is arranged above the dosing unit 21, the air inlet 24 can be arranged in a wall of the funnel 22, together with an opening 251 in the funnel wall 25 opposite to the air inlet 24, thus allowing blasting material M ejected by an impulse of pressurised air to be projected into the bypass 6.

The vibration plate 31 preferably has a flat horizontal surface 311 and side walls 313 surrounding the surface 311 on all sides except along the straight edge 312 to prevent the blasting material M from falling off the vibration plate 31 anywhere but from the straight edge 312. The vibrator 32 is preferably a pneumatic vibrator and is preferably adapted to vibrate the vibration plate 31 at an adjustable frequency between 80 Hz and 150 Hz, more preferably between 100 Hz and 130 Hz.

For example, linear vibrations applied to the vibration plate 31 at an angle of around 45° to the surface 311 of the vibration plate 31 and oriented perpendicularly to the straight edge 312, wherein an upward and forward movement of the vibration plate 31 towards the straight edge 312 alternates with a downward and backward movement away from the straight edge 312, have proven suitable for simultaneously advancing the blasting material M towards the straight edge 312 and spreading it over the width of the vibration plate 31 (see figure 2c). Therefore, the vibrator 32 may be connected to the vibration plate 31 at a corresponding vibration angle of 45° oriented towards the straight edge 312 of the vibration plate 31.

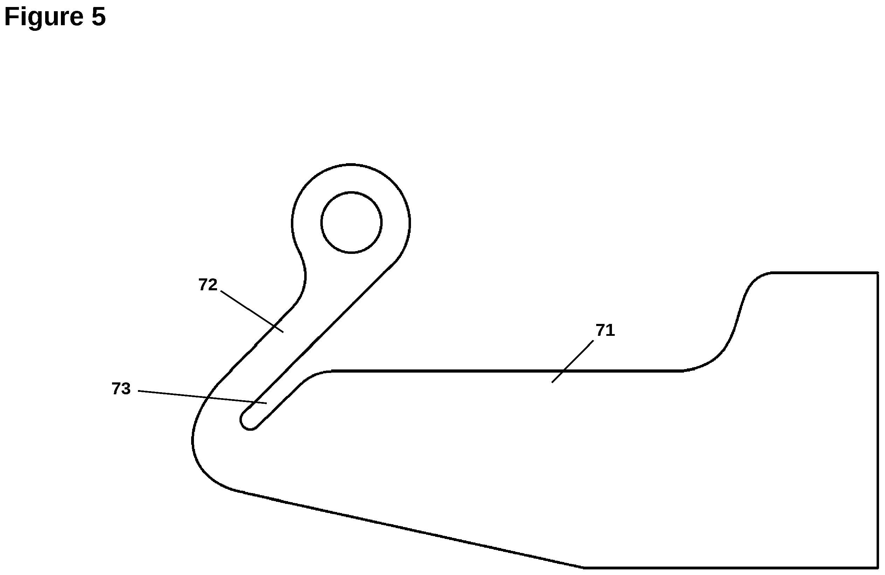

The use of a specific mounting bracket 7 has proven particularly advantageous to mount the vibration plate 31 on the analysing unit while allowing sufficient flexibility for it to vibrate efficiently. The mounting bracket 7 comprises a rigid base 71 to be mounted on a fixed support such as a casing of the analysing unit and a strip of material 72 extending from the rigid base 71 (see figure 5). The strip of material 72 has a narrower section than the rigid base 71 and the vibration plate 31 is fastened to the distal end of the strip of material 72. In order to allow the vibration plate 31 to vibrate, the longitudinal axis of the strip of material 72 is oriented perpendicularly to the direction of vibration. This way, the vibrations are applied in the direction in which the strip of material 72 is most flexible, allowing its distal end to vibrate together with the vibration plate 31 while its proximal end is firmly connected to the base 71. In the preferred embodiment of the invention, the mounting bracket 7 is gooseneck-shaped, the strip of material 72 being separated from the rigid base 71 by a narrow cut 73, which increases the flexibility of the strip of material 72. For example, if linear vibrations are applied to the vibration plate 31 at an angle of around 45° to the surface 311 of the vibration plate 31, the longitudinal axis of the strip of material 72 is also oriented at 45° with respect to the surface 311 of the vibration plate 31 and perpendicular to the direction of vibration.

The width of the flat horizontal surface 311 of the vibration plate 31 is preferably larger at its straight edge 312 than it is in the area in which the blasting material M lands on the vibration plate 31, allowing the blasting material M to spread on the flat horizontal surface 311 while moving towards its straight edge 312 under the effect of the vibrations. For example, the vibration plate 31 may have a roughly triangular shape, one side being the straight edge 312 and the blasting material M arriving onto the vibration plate 31 near the opposed tip thereof. This way, the vibration plate 31 may be mounted on the analysing unit with two mounting brackets 7 fastened on either end of the straight edge 312 and a third bracket fastened near the opposed tip of the vibration plate 31. The third bracket may be identical to the mounting brackets 7 or have a different build.

Preferably, the measurement unit 41, 42 consists of an acquisition unit adapted to acquire images of the falling curtain C of particles and of a processing unit adapted to measure the size and count the number of the particles in the images acquired by the acquisition unit. The acquisition unit is arranged beneath the spreading unit 3 and comprises a camera 41 adapted for acquiring images of the falling curtain C of particles (see figures 1a-b). Advantageously, the direction in which the camera 41 points is oriented perpendicularly to the falling direction of the curtain C of particles. The acquisition unit also comprises an illuminator 42 providing homogenous collimated light, preferably with a temperature between 4000 K and 8000 K, most preferably between 5000 K and 7000 K, which will be acquired by the camera 41. Preferably, the camera 41 and the illuminator 42 are provided with a cleaning system such as a pressure air cleaning system to remove any dust and maintain the quality of the illumination and the resolution of the camera. In the preferred embodiment of the invention, the illuminator 42 is an illuminated background arranged opposite to the camera 41 on the other side of the falling curtain C of particles, in which case the camera 41 acquires images of the light transmitted through the curtain C of falling particles. In these images, the particles will therefore appear as dark spots on the illuminated background. In another possible embodiment of the invention, the illuminator 42 is arranged on the same side of the falling curtain C of particles as the camera 41, in which case the camera 41 acquires images of the light reflected by the curtain C of falling particles. In these images, the particles will therefore appear as bright spots on a darker background. The images acquired by the acquisition unit are then analysed by the processing unit which determines whether each pixel of each image belongs to a particle of blasting material M or not, detects each particle, counts the number of particles, and then counts the number of pixels making up each particle to measure their size. Advantageously, the processing unit is further programmed to calculate the particle size distribution of the particles in the falling curtain C and/or any other statistics of interest to the user. This data can be displayed on a screen arranged on the analysing unit itself or on the blasting machine or sent to an external controller and/or display by wired or wireless transmission.

The calculated particle size distribution of the blasting material M can be compared with a target specification defined by the user, and a deviation from the target specification may trigger a warning message. The target particle size distribution of the blasting material M can be activated or deactivated for each subrange of the blasting media distribution. The acquired particle size distribution of the blasting material M can be stored as a reference measurement, such as a snapshot, thus allowing the target specification to be programmed quickly. Advantageously, the control system can be programmed to ignore particles of certain sizes defined by the user and exclude them from the calculation of the particle size distribution. The blasting media size categories can be specified by users, so a finer split compared to regular sieve analyses using mechanical sieves is possible.

In an advantageous embodiment of the invention, the analysing unit may be activated or deactivated anytime during the operation of the shot blasting or shot peening machine it is mounted on. When deactivated, a gate installed in or above the inlet 1 stops the flow of blasting material M into the analysing unit. There is no need to activate the analysing unit to measure the particle size distribution of the blasting material M continuously. Tests have shown that activating the analysing unit at regular time intervals such as for 1 minute every 15 minutes can be sufficient. Preferably, the analysing unit is adapted to be activated and deactivated automatically and/or remotely.

In an advantageous embodiment of the invention, a screen, preferably of glass or of Plexiglas, is removably arranged before the camera 41, below the vibration plate's 31 straight edge 312, in the plane in which the falling curtain C of blasting material M is located when the analysing unit is in operation. This screen is used to calibrate the camera 41 and simulates a falling curtain C of blasting material M. It has been found that calibration of the camera 41 is easier when using a fixed screen rather than having moving particles of blasting material M falling in front of the camera 41. When the analysing unit is in operation, the screen is removed in order not to interfere with the falling curtain C of blasting material M and with the acquisition of images by the camera 41.

In the preferred embodiment of the invention, a funnel 51 is arranged between the measurement unit 41, 42 and the outlet 5 in order to collect the curtain C of particles falling from the vibration plate 31 and guide them towards the outlet 5 (see figures 1a-b). Preferably, the bypass exit is located within the funnel 51.

Advantageously, the analysing unit is provided with a sample extractor 8 adapted to collect a sample of particles from the blasting material M to perform other tests on the blasting material M such as hardness measurements, chemical analyses and offline sieve analyses measurements. The sample extractor 8 preferably comprises a collector 81 arranged beneath the bypass exit and a collector gate 82 arranged at the bottom of the collector 81, which can be opened to retrieve blasting material M accumulated within the collector 81. The collector may have guide plates which divert all or part of the stream of blasting material M falling out of the bypass exit towards the collector 81.

Once the collector is 81 is filled with blasting material M, the incoming blasting material M flows over to the outlet 5. Advantageously, the collector 81 is at least partly arranged within the funnel 51 to make sure that the blasting material M flowing over the filled collector 81 is guided towards the outlet 5.

The analysing unit according to the present invention can be seamlessly connected to the machine controller of almost any blasting machine. The fast and continuous measurement allows an optimal monitoring of the particles size in the blasting material M and allows fast reaction to trends (presence of big portion of undersize abrasive). Users can issue a measuring protocol linked to every batch of workpieces or with a time stamp in case of continuous production. The digital measurement of the particle size allows digital visualisation of the acquired data and remote access to the results anytime. Users can program the processing unit to trigger custom warnings or alarms if certain events are detected. As a result, the quality of the blasting material M is improved, which in turn improves the quality of the blasting process. The results from the analysing unit can be used to control the adjustment of the shot blasting or shot peening machine's separator and/or to control the air flow of the machine's dedusting system to maintain a stable abrasive distribution and to reduce the abrasive consumption and therefore reduce the operation costs.

## Claims

1. Analysing unit for dry blasting material (M) comprising:
• an inlet (1) adapted for the entry of blasting material (M) into the analysing unit;
• a dosing unit (2) adapted to create a constant and continuous stream of blasting material (M), with a dosing chute (21) having a top opening (211) and a bottom opening (212);
• a spreading unit (3) adapted to spread the stream of blasting material (M) into a curtain (C) of falling blasting material (M);
• a measurement unit (4); and
• an outlet (5) adapted for the exit of a stream of blasting material (M) from the analysing unit, **characterized in that** it further comprises a vibration plate (31) arranged beneath the bottom opening (212) of the dosing chute (21) and a vibrator (32) adapted to vibrate the vibration plate (31); and
that the measurement unit is adapted to count the number and measure the size of particles contained in the falling curtain of blasting material (M);
wherein the distance (d) between the bottom opening (212) of the dosing chute (21) and the vibration plate (31) is:
• sufficiently small that when the vibration plate (31) does not vibrate, the blasting material (M) pouring out of the bottom opening (212) accumulates on the vibration plate (31) in the immediate vicinity of the bottom opening (212) and forms a small heap (H) clogging the bottom opening (212), thus preventing more blasting material (M) to pour out of the bottom opening (212); and
• sufficiently large that when the vibration plate (31) does vibrate, the blasting material (M) pouring out of the bottom opening (212) spreads on the vibration plate (31) and continuously pours out of the bottom opening (212) rather than forming a heap (H) clogging the bottom opening (212).

2. Analysing unit according to claim 1,
wherein
the distance (d) between the bottom opening (212) of the dosing chute (21) and the vibration plate (31) is between 4 and 15 mm.

3. Analysing unit according to claim 1,
wherein
the top opening (211) of the dosing chute (21) is connected to a funnel (22) having a wider section at its top and a narrower section at its bottom, and thus being adapted to collect and direct incoming blasting material (M) into the dosing chute (21).

4. Analysing unit according to claim 1,
wherein
the dosing chute (21) is attached to the analysing unit in a way allowing its bottom opening (212) to be movable along the longitudinal direction of the dosing chute (21) with respect to the vibration plate (31).

5. Analysing unit according to claim 1,
wherein
the dosing unit (2) comprises a silo (23) arranged within the inlet (1) or at the bottom end of the inlet (1) and the dosing chute (21) is arranged beneath the silo (23),
the silo (23) has a top opening (231) wider than its bottom opening (232) and is thus adapted to accumulate a certain amount of the blasting material (M) entering the inlet (1) and adapted to create a stream of blasting material (M) trickling down its bottom opening (232) into the dosing chute (21).

6. Analysing unit according to claim 1,
comprising
a bypass (6) adapted to lead part of the blasting material (M) from the inlet (1) to the outlet (5) without going through the spreading and measurement units (3, 41, 42), with one or several bypass chutes (61) connecting the inlet (1) to a bypass exit located downstream from the measurement unit (41, 42) and upstream from the outlet (5).

7. Analysing unit according to claims 5 and 6,
wherein
the silo (23) is arranged within the inlet (1) and its top opening 231 occupies only a part of the whole section of the inlet (1), wherein the rest of the section of the inlet (1) not occupied by the silo's (23) top opening (231) constitutes an entrance of the bypass (61).

8. Analysing unit according to claims 5 and 6,
wherein
the silo (23) and its bottom opening (232) are dimensioned to hold and let through only a fraction of the blasting material (M) entering the silo (23), and
the bypass (6) is arranged adjacent to the silo (23), thus allowing blasting material (M) to flow over the filled silo (23) and/or through an opening (234) in a wall (213) separating the silo (23) and the bypass (6) into the bypass (6).

9. Analysing unit according to claims 5 and 6,
wherein
the bypass (6) is arranged adjacent to the region between the silo (23) and the dosing chute (21), the region between the silo (23) and the dosing chute (21) has an opening (25) to the bypass (6) and an air inlet (24) is provided between the silo (23) and the dosing chute (21) opposite to the opening (25).

10. Analysing unit according to claim 1,
wherein
the vibration plate (31) has a flat horizontal surface (311) and side walls (313) surrounding the flat horizontal surface (311) on all sides except along a straight edge (312).

11. Analysing unit according to claim 1,
wherein
a mounting bracket (7) comprises a rigid base (71) a strip of material (72) extending from the rigid base (71), the strip of material (72) having a narrower section than the rigid base (71), and
the vibration plate (31) is fastened to the distal end of the strip of material (72) and the longitudinal axis of the strip of material (72) is oriented perpendicularly to the direction of vibration of the vibrator (32).

12. Analysing unit according to claim 11,
**characterised in that**
the mounting bracket (7) is gooseneck-shaped, the strip of material (72) being separated from the rigid base (71) by a narrow cut (73).

13. Analysing unit according to claim 1,
**characterised in that**
the measurement unit (41, 42) consists of an acquisition unit adapted to acquire images of a falling curtain (C) particles and of a processing unit adapted to measure the size of the particles in the images acquired by the acquisition unit,
wherein the acquisition unit is arranged beneath the spreading unit (3) and comprises a camera (41) adapted for acquiring images of the falling curtain (C) of particles as well as an illuminator (42) providing homogenous collimated light for illuminating the falling curtain (C) of particles.

14. Method for analysing dry blasting material (M) with an analysing unit according to any one of the claims 1 to 13, the method comprising the following steps:
• providing a constant and continuous curtain (C) of falling particles of blasting material (M); and
• acquiring and analysing images of the curtain (C) of falling particles of blasting material (M),
**characterized in that** the analysis device comprises a vibration plate (31) with a straight edge (32), wherein
the constant and continuous curtain (C) of falling particles of blasting material (M) is obtained by having the blasting material (M) flow onto the vibration plate (31) to form a heap (H) of blasting material (M) thereon, the heap (H) of blasting material (M):
• blocking the flow of blasting material (M) onto the vibration plate (31) when the vibration plate (31) does not vibrate; and
• spreading onto the vibration plate (31) when the latter does vibrate without building up large enough to block the flow of blasting material (M) onto the vibration plate (31), wherein a constant and continuous flow of blasting material (M) flows onto the vibration plate (31), spreads thereon in a single layer of particles and falls off the straight edge (32) in a constant and continuous curtain (C) of falling particles of blasting material (M).

15. Method according to claim 14,
**characterised in that**
constant and continuous linear vibrations are applied to the vibration plate (31) at an angle of around 45° to the surface (311) of the vibration plate (31) and oriented perpendicularly to the straight edge (312), wherein an upward and forward movement of the vibration plate (31) towards the straight edge (312) alternates with a downward and backward movement away from the straight edge (312).

## Patentansprüche

1. Analyseeinheit für Trockenstrahlmaterial (M), umfassend:
• einen Einlass (1), der für den Eintritt von Strahlmaterial (M) in die Analyseeinheit ausgelegt ist;
• eine Dosiereinheit (2), die dazu ausgelegt ist, einen konstanten und kontinuierlichen Strom von Strahlmaterial (M) zu erzeugen, mit einer Dosierrutsche (21), die eine obere Öffnung (211) und eine untere Öffnung (212) aufweist;
• eine Streueinheit (3), die dazu ausgelegt ist, den Strom von Strahlmaterial (M) in einen Vorhang (C) von fallendem Strahlmaterial (M) zu verteilen;
• eine Messeinheit (4);
und
• einen Auslass (5), der für den Austritt eines Stroms von Strahlmaterial (M) von der Analyseeinheit ausgelegt ist, **dadurch gekennzeichnet, dass** er ferner eine Vibrationsplatte (31), die unterhalb der unteren Öffnung (212) der Dosierrutsche (21) angeordnet ist, und einen Vibrator (32), der dazu ausgelegt ist, die Vibrationsplatte (31) vibrieren zu lassen, umfasst; und
dass die Messeinheit dazu ausgelegt ist, die Anzahl der in dem fallenden Vorhang von Strahlmaterial (M) enthaltenen Partikel zu zählen und deren Größe zu messen;
wobei der Abstand (d) zwischen der unteren Öffnung (212) der Dosierrutsche (21) und der Vibrationsplatte (31) Folgendes ist:
• ausreichend klein, dass sich, wenn die Vibrationsplatte (31) nicht vibriert, das Strahlmaterial (M), das aus der unteren Öffnung (212) austritt, auf der Vibrationsplatte (31) in unmittelbarer Nähe der unteren Öffnung (212) ansammelt und einen kleinen Haufen (H), der die untere Öffnung (212) verstopft, bildet, wodurch verhindert wird, dass mehr Strahlmaterial (M) aus der unteren Öffnung (212) austritt; und
• ausreichend groß, dass sich, wenn die Vibrationsplatte (31) vibriert, das Strahlmaterial (M), das aus der unteren Öffnung (212) austritt, auf der Vibrationsplatte (31) verteilt und kontinuierlich aus der unteren Öffnung (212) austritt anstatt einen Haufen (H) zu bilden, der die untere Öffnung (212) verstopft.

2. Analyseeinheit nach Anspruch 1,
wobei
der Abstand (d) zwischen der unteren Öffnung (212) der Dosierrutsche (21) und der Vibrationsplatte (31) zwischen 4 und 15 mm beträgt.

3. Analyseeinheit nach Anspruch 1,
wobei
die obere Öffnung (211) der Dosierrutsche (21) mit einem Trichter (22), der einen breiteren Abschnitt oben und einen engeren Abschnitt unten aufweist, verbunden ist und somit dazu ausgelegt ist, ankommendes Strahlmaterial (M) zu sammeln und in die Dosierrutsche (21) zu leiten.

4. Analyseeinheit nach Anspruch 1,
wobei
die Dosierrutsche (21) so an der Analyseeinheit befestigt ist, dass sie ermöglicht, dass ihre untere Öffnung (212) entlang der Längsrichtung der Dosierrutsche (21) in Bezug auf die Vibrationsplatte (31) beweglich ist.

5. Analyseeinheit nach Anspruch 1,
wobei
die Dosiereinheit (2) ein Silo (23) umfasst, das innerhalb des Einlasses (1) oder an dem unteren Ende des Einlasses (1) angeordnet ist, und die Dosierrutsche (21) unterhalb des Silos (23) angeordnet ist, das Silo (23) eine obere Öffnung (231), die breiter als seine untere Öffnung (232) ist, aufweist und daher dazu ausgelegt ist, eine gewisse Menge des Strahlmaterials (M), das in den Einlass (1) eintritt, anzusammeln, und dazu ausgelegt ist, einen Strom von Strahlmaterial (M), das durch seine untere Öffnung (232) in die Dosierrutsche (21) herunterrieselt, zu erzeugen.

6. Analyseeinheit nach Anspruch 1,
umfassend
einen Bypass (6), der dazu ausgelegt ist, einen Teil des Strahlmaterials (M) von dem Einlass (1) zu dem Auslass (5) zu führen, ohne die Streu- und die Messeinheit (3, 41, 42) zu passieren, mit einen oder mehreren Bypassrutschen (61), die den Einlass (1) mit einem Bypassausgang verbinden, der sich stromabwärts von der Messeinheit (41, 42) und stromaufwärts von dem Auslass (5) befindet.

7. Analyseeinheit nach Anspruch 5 und 6,
wobei
das Silo (23) innerhalb des Einlasses (1) angeordnet ist und seine obere Öffnung 231 nur einen Teil des gesamten Abschnitts des Einlasses (1) belegt, wobei der Rest des Abschnitts des Einlasses (1), der nicht durch die obere Öffnung (231) des Silos (23) belegt wird, einen Eingang des Bypasses (61) darstellt.

8. Analyseeinheit nach Anspruch 5 und 6,
wobei
das Silo (23) und seine untere Öffnung (232) so bemessen sind, dass sie nur einen Bruchteil des Strahlmaterials (M), das in das Silo (23) eintritt, halten und durchlassen, und
der Bypass (6) benachbart zu dem Silo (23) angeordnet ist, wodurch es ermöglicht wird, dass Strahlmaterial (M) über das gefüllte Silo (23) und/oder durch eine Öffnung (234) in einer Wand (213), die das Silo (23) und den Bypass (6) trennt, in den Bypass (6) fließt.

9. Analyseeinheit nach Anspruch 5 und 6,
wobei
der Bypass (6) benachbart zu der Region zwischen dem Silo (23) und der Dosierrutsche (21) angeordnet ist, die Region zwischen dem Silo (23) und der Dosierrutsche (21) eine Öffnung (25) zu dem Bypass (6) aufweist und ein Lufteinlass (24) zwischen dem Silo (23) und der Dosierrutsche (21) gegenüber der Öffnung (25) bereitgestellt ist.

10. Analyseeinheit nach Anspruch 1,
wobei
die Vibrationsplatte (31) eine flache horizontale Oberfläche (311) und Seitenwände (313), welche die flache horizontale Oberfläche (311) auf sämtlichen Seiten außer entlang einer geraden Kante (312) umgeben, aufweist.

11. Analyseeinheit nach Anspruch 1,
wobei
eine Montagehalterung (7) eine starre Basis (71) einen Streifen von Material (72), der sich von der starren Basis (71) erstreckt, umfasst, wobei der Streifen von Material (72) einen schmaleren Querschnitt als die starre Basis (71) aufweist und
die Vibrationsplatte (31) an dem distalen Ende des Streifens von Material (72) befestigt ist und die Längsachse des Streifens von Material (72) senkrecht zu der Vibrationsrichtung des Vibrators (32) ausgerichtet ist.

12. Analyseeinheit nach Anspruch 11,
**dadurch gekennzeichnet, dass**
die Montagehalterung (7) schwanenhalsförmig ist, wobei der Streifen von Material (72) durch einen schmalen Schnitt (73) von der starren Basis (71) getrennt ist.

13. Analyseeinheit nach Anspruch 1,
**dadurch gekennzeichnet, dass**
die Messeinheit (41, 42) aus einer Erfassungseinheit, die dazu ausgelegt ist, Bilden eines fallenden Vorhangs (C) Partikel zu erfassen, und einer Verarbeitungseinheit, die dazu ausgelegt ist, die Größe der Partikel in den durch die Erfassungseinheit erfassten Bildern zu messen, besteht,
wobei die Erfassungseinheit unterhalb der Streueinheit (3) angeordnet ist und eine Kamera (41), die zum Erfassen von Bildern des fallenden Vorhangs (C) von Partikeln ausgelegt ist, sowie eine Beleuchtungseinrichtung (42), die homogenes kollimiertes Licht zum Beleuchten des fallenden Vorhangs (C) von Partikeln bereitstellt, umfasst.

14. Verfahren zum Analysieren von Trockenstrahlmaterial (M) mit einer Analyseeinheit nach einem der Ansprüche 1 bis 13, wobei das Verfahren die folgenden Schritte umfasst:
• Bereitstellen eines konstanten und kontinuierlichen Vorhangs (C) von fallenden Partikeln von Strahlmaterial (M); und
• Erfassen und Analysieren von Bildern des Vorhangs (C) von fallenden Partikeln von Strahlmaterial (M),
**dadurch gekennzeichnet, dass** die Analysevorrichtung eine Vibrationsplatte (31) mit einer geraden Kante (32) umfasst, wobei der konstante und kontinuierliche Vorhang (C) von fallenden Partikeln von Strahlmaterial (M) dadurch erlangt wird, dass das Strahlmaterial (M) auf die Vibrationsplatte (31) fließt, um darauf einen Haufen (H) von Strahlmaterial (M) zu bilden, wobei der Haufen (H) von Strahlmaterial (M):
• den Fluss von Strahlmaterial (M) auf die Vibrationsplatte (31) blockiert, wenn die Vibrationsplatte (31) nicht vibriert; und
• sich auf der Vibrationsplatte (31) verteilt, wenn diese vibriert, ohne sich groß genug aufzubauen, um den Fluss von Strahlmaterial (M) auf die Vibrationsplatte (31) zu blockieren, wobei ein konstanter und kontinuierlicher Fluss von Strahlmaterial (M) auf die Vibrationsplatte (31) fließt, sich darauf in einer einzigen Schicht von Partikeln verteilt und von der geraden Kante (32) in einem konstanten und kontinuierlichen Vorhang (C) von fallenden Partikeln von Strahlmaterial (M) abfällt.

15. Verfahren nach Anspruch 14,
**dadurch gekennzeichnet, dass**
konstante und kontinuierliche lineare Vibrationen auf die Vibrationsplatte (31) in einem Winkel von etwa 45° zu der Oberfläche (311) der Vibrationsplatte (31) ausgeübt werden und senkrecht zu der geraden Kante (312) ausgerichtet sind, wobei sich eine Aufwärts- und Vorwärtsbewegung der Vibrationsplatte (31) in Richtung der geraden Kante (312) mit einer Abwärts- und Rückwärtsbewegung weg von der geraden Kante (312) abwechselt.

## Revendications

1. Unité d'analyse de matériau de sablage à sec (M) comprenant :
• une entrée (1) adaptée pour l'entrée de matériau de sablage (M) dans l'unité d'analyse ;
• une unité de dosage (2) adaptée pour créer un flux constant et continu de matériau de sablage (M), avec une goulotte de dosage (21) ayant une ouverture supérieure (211) et une ouverture inférieure (212) ;
• une unité d'étalement (3) adaptée pour étaler le flux de matériau de sablage (M) en un rideau (C) de matériau de sablage (M) en chute ;
• une unité de mesure (4) ; et
• une sortie (5) adaptée pour la sortie d'un flux de matériau de sablage (M) de l'unité d'analyse, **caractérisée en ce qu'**elle comprend en outre une plaque vibrante (31) agencée sous l'ouverture inférieure (212) de la goulotte de dosage (21) et un vibrateur (32) adapté pour faire vibrer la plaque vibrante (31) ; et
**en ce que** l'unité de mesure est adaptée pour compter le nombre et mesurer la taille de particules contenues dans le rideau en chute de matériau de sablage (M) ;
dans laquelle la distance (d) entre l'ouverture inférieure (212) de la goulotte de dosage (21) et la plaque vibrante (31) est :
• suffisamment petite pour que, lorsque la plaque vibrante (31) ne vibre pas, le matériau de sablage (M) s'écoulant de l'ouverture inférieure (212) s'accumule sur la plaque vibrante (31) à proximité immédiate de l'ouverture inférieure (212) et forme un petit tas (H) obstruant l'ouverture inférieure (212), empêchant ainsi une quantité supplémentaire de matériau de sablage (M) de s'écouler de l'ouverture inférieure (212) ; et
• suffisamment grande pour que, lorsque la plaque vibrante (31) est mise en vibration, le matériau de sablage (M) s'écoulant de l'ouverture inférieure (212) s'étale sur la plaque vibrante (31) et s'écoule de manière continue de l'ouverture inférieure (212) plutôt que de former un tas (H) obstruant l'ouverture inférieure (212).

2. Unité d'analyse selon la revendication 1, dans laquelle la distance (d) entre l'ouverture inférieure (212) de la goulotte de dosage (21) et la plaque vibrante (31) est comprise entre 4 et 15 mm.

3. Unité d'analyse selon la revendication 1,
dans laquelle
l'ouverture supérieure (211) de la goulotte de dosage (21) est connectée à un entonnoir (22) ayant une section plus large à son sommet et une section plus étroite à sa base, et étant ainsi adapté pour collecter et diriger le matériau de sablage entrant (M) dans la goulotte de dosage (21).

4. Unité d'analyse selon la revendication 1,
dans laquelle
la goulotte de dosage (21) est fixée à l'unité d'analyse de manière à permettre à son ouverture inférieure (212) d'être mobile le long de la direction longitudinale de la goulotte de dosage (21) par rapport à la plaque vibrante (31).

5. Unité d'analyse selon la revendication 1,
dans laquelle
l'unité de dosage (2) comprend un silo (23) agencé à l'intérieur de l'entrée (1) ou à l'extrémité inférieure de l'entrée (1) et la goulotte de dosage (21) est agencée sous le silo (23), le silo (23) a une ouverture supérieure (231) plus large que son ouverture inférieure (232) et est ainsi adapté pour accumuler une certaine quantité du matériau de sablage (M) pénétrant dans l'entrée (1) et adapté pour créer un flux de matériau de sablage (M) s'écoulant par son ouverture inférieure (232) dans la goulotte de dosage (21).

6. Unité d'analyse selon la revendication 1, comprenant
une dérivation (6) adaptée pour conduire une partie du matériau de sablage (M) à partir de l'entrée (1) vers la sortie (5) sans passer par les unités d'étalement et de mesure (3, 41, 42), avec une ou plusieurs goulottes de dérivation (61) connectant l'entrée (1) à une sortie de dérivation située en aval de l'unité de mesure (41, 42) et en amont de la sortie (5).

7. Unité d'analyse selon les revendications 5 et 6,
dans laquelle
le silo (23) est agencé à l'intérieur de l'entrée (1) et son ouverture supérieure (231) occupe seulement une partie de la section totale de l'entrée (1), dans laquelle le reste de la section de l'entrée (1) non occupé par l'ouverture supérieure (231) du silo (23) constitue une entrée de la dérivation (61).

8. Unité d'analyse selon les revendications 5 et 6,
dans laquelle
le silo (23) et son ouverture inférieure (232) sont dimensionnés pour retenir et n'autoriser l'accès qu'à uniquement une fraction du matériau de sablage (M) pénétrant dans le silo (23), et
la dérivation (6) est agencée de manière adjacente au silo (23), permettant ainsi au matériau de sablage (M) de s'écouler au-dessus du silo (23) rempli et/ou à travers une ouverture (234) dans une paroi (213) séparant le silo (23) et la dérivation (6) jusque dans la dérivation (6).

9. Unité d'analyse selon les revendications 5 et 6,
dans laquelle
la dérivation (6) est agencée de manière adjacente à la région entre le silo (23) et la goulotte de dosage (21), la région entre le silo (23) et la goulotte de dosage (21) a une ouverture (25) vers la dérivation (6) et une entrée d'air (24) est prévue entre le silo (23) et la goulotte de dosage (21) à l'opposé de l'ouverture (25).

10. Unité d'analyse selon la revendication 1, dans laquelle
la plaque vibrante (31) a une surface horizontale plate (311) et des parois latérales (313) entourant la surface horizontale plate (311) de tous les côtés sauf le long d'un bord droit (312).

11. Unité d'analyse selon la revendication 1, dans laquelle
un support de montage (7) comprend une base rigide (71), une bande de matériau (72) s'étendant à partir de la base rigide (71), la bande de matériau (72) ayant une section plus étroite que la base rigide (71), et
la plaque vibrante (31) est fixée à l'extrémité distale de la bande de matériau (72) et l'axe longitudinal de la bande de matériau (72) est orienté perpendiculairement à la direction de vibration du vibrateur (32).

12. Unité d'analyse selon la revendication 11,
**caractérisée en ce que**
le support de montage (7) est en forme de col de cygne, la bande de matériau (72) étant séparée de la base rigide (71) par une découpe étroite (73).

13. Unité d'analyse selon la revendication 1,
**caractérisée en ce que**
l'unité de mesure (41, 42) est constituée d'une unité d'acquisition adaptée pour acquérir des images de particules d'un rideau en chute (C) et d'une unité de traitement adaptée pour mesurer la taille des particules dans les images acquises par l'unité d'acquisition,
dans laquelle l'unité d'acquisition est agencée sous l'unité d'étalement (3) et comprend une caméra (41) adaptée pour acquérir des images du rideau en chute (C) de particules ainsi qu'un illuminateur (42) fournissant une lumière collimatée homogène pour illuminer le rideau en chute (C) de particules.

14. Procédé d'analyse de matériau de sablage à sec (M) au moyen d'une unité d'analyse selon l'une quelconque des revendications 1 à 13, le procédé comprenant les étapes consistant à :
• fournir un rideau constant et continu (C) de particules en chute de matériau de sablage (M) ; et
• acquérir et analyser des images du rideau (C) de particules en chute de matériau de sablage (M),
**caractérisé en ce que** le dispositif d'analyse comprend une plaque vibrante (31) avec un bord droit (32), dans lequel le rideau constant et continu (C) de particules en chute de matériau de sablage (M) est obtenu en amenant le matériau de sablage (M) à s'écouler sur la plaque vibrante (31) pour y former un tas (H) de matériau de sablage (M), le tas (H) de matériau de sablage (M) :
• bloquant l'écoulement de matériau de sablage (M) sur la plaque vibrante (31) lorsque la plaque vibrante (31) ne vibre pas ; et
• s'étalant sur la plaque vibrante (31) lorsque cette dernière est mise en vibration sans s'accumuler suffisamment pour bloquer l'écoulement de matériau de sablage (M) sur la plaque vibrante (31), dans lequel un flux constant et continu de matériau de sablage (M) s'écoule sur la plaque vibrante (31), s'y étale en une seule couche de particules et tombe du bord droit (32) en un rideau constant et continu (C) de particules en chute de matériau de sablage (M).

15. Procédé selon la revendication 14,
**caractérisée en ce que**
des vibrations linéaires constantes et continues sont appliquées à la plaque vibrante (31) à un angle d'environ 45° par rapport à la surface (311) de la plaque vibrante (31) et orientées perpendiculairement au bord droit (312), dans lequel un mouvement ascendant et vers l'avant de la plaque vibrante (31) vers le bord droit (312) alterne avec un mouvement descendant et vers l'arrière s'éloignant du bord droit (312).
